# EUROPEAN PATENT APPLICATION

(11) **EP 3 828 625 A1**
(43) Date of publication of application: **02.06.2021**
(21) Application number: 19211289.4
(22) Date of filing: 26.11.2019
(51) Int. Cl.: G02F 1/1343, G02F 1/1334, G02F 1/137, G02B 5/30

(54) **LIQUID CRYSTAL DEVICE**

(71) Applicant: HighVisTec GmbH, 4108 Witterswil (CH)
(72) Inventor: KOMITOV, Lachezar, 411 29 Göteborg (SE); IBN ELHAJ, Mohammed, 4108 Witterswil (CH)
(74) Representative: AWA Sweden AB

(57) **Abstract**

The present invention relates to a liquid crystal device comprising a first substrate (9), a second substrate (14) and a liquid crystal layer (16) sandwiched between said first and second substrates. An electrode structure is deposited on at least one of said first and second substrates, said electrode structure comprising: a first electrode layer (10), an insulating layer (11) and a second electrode layer (12) wherein said second electrode layer comprises holes, wherein each hole is adapted to generate local fringe fields with azimuthal degenerate direction.

## Description

### Background of the invention

Electrode configurations in the conventional LCDs are generating electric field, which direction is either orthogonal or parallel to the substrates of LCD, or has several different tilted directions with respect to the device substrates, which projections on the substrates do not have a continuous azimuthal distribution, resulting thus an azimuthal angular dependence of the generated images.

Moreover, the use of polarisers and different compensation films, for displaying information generated by the LCD, worsens the optical characteristics of the displayed information and complicate the device structure and the production process.

Many solutions for improving the azimuthal viewing angle of LCDs have been proposed and experimented but still there is no satisfactory solution allowing constant viewing angle with or without crossed linear or circular polariser.

### Summary of the invention

It is an object of the present invention to address the above-mentioned problems of the prior of art and to provide an improved liquid crystal device which is enabling to manipulate incoming light as well as to display information content being viewing angle independent. The liquid crystal device should enable also fast switching as well as long time lasting memory states (bistable states).

According to a first aspect of the present invention, a liquid crystal device is provided, the device comprising a first substrate, a second substrate and a liquid crystal layer sandwiched between said first and second substrate;
wherein an electrode structure is deposited on at least one of said first and second substrates, said electrode structure comprising:
- a first electrode layer;
- an insulating layer;
- a second electrode layer;
wherein said second electrode layer comprises holes, wherein each hole is adapted to generate local fringe fields with azimuthal degenerate direction.

The electrode with layered structure, is generating plurality of azimuthally degenerated fringe fields (AD-FFs) around the holes in the second electrode. These AD-FFs have an azimuthal degenerated direction and are, to a large extent, localized very close to the second electrode surface.

The liquid crystal layer may comprise, but not limited to, a nematic, cholesteric, smectic or Blue-phase liquid crystal.

The molecules of nematic liquid crystals have anisotropic molecular shape and long-range molecular order. Therefore, they possess anisotropic physical properties such as birefringence, for instance. When the liquid crystal molecules are aligned in unique alignment direction, the nematic liquid crystal behave optically as a uniaxial (birefringent) optical plate, with optic axis along the preferred direction of alignment. Rearrangement of the liquid crystal from one kind of configuration to another, by an applied electric field, results in generation of electro-optic effect, due to liquid crystal birefringence. Cholesteric liquid crystals are similar to the nematic liquid crystals, but they possess also a helical molecular order giving rise to specific for the cholesterics optical properties such as selective light reflection and rotation of the light polarisation plane. Smectic liquid crystals, such as SmA, possess layered structure in addition to the long range order of nematics.

Nematic, cholesteric and smectic liquid crystals can be oriented as well as re-oriented by an external electric field, thus, giving rise to electro-optic effects. To be visualised, some of these effects are observable between linear or circular polarisers. No need of any polarisers would be obtained by dissolving a dichroic dye or mixture of such dyes in the liquid crystal.

According to at least one exemplary embodiment of the present invention, said second electrode layer comprises a plurality of electrodes comprising holes for generating local fringe fields with azimuthal degenerate direction that, wherein said plurality of electrodes are electrically insulated of each other.

By providing a plurality of electrodes, each having holes, in an electrode layer, a pixelated structure where the electrodes, and therefore the holes, can be driven independently is achieved.

According to at least one exemplary embodiment of the present invention, both of said first and second substrates comprise said layered electrode structure.

By having both substrates comprising layered electrode structures, the effect of the AD-FFs will increase resulting a better contrast ratio of the displayed information (images)

According to at least one exemplary embodiment said holes of the second electrode layer on said first substrate have a first distribution and said holes of the second electrode layer on said second substrate have a second distribution.

For example, the first distribution is different from the second distribution. Therefore, the holes may, e.g., not coincide. If the holes in the electrodes on the one substrate do not coincide with the holes of the electrodes on the other substrate, a better coverage of the working area of the device will be achieved.

As another example, the holes may be arranged such that they coincide. That the holes are coinciding is to be understood as them coinciding when the liquid crystal device is viewed from a direction normal to a surface of either substrate, i.e. a hole of the electrode structure on the first substrate and a hole of the electrode structure on the second substrate lie on a common axis coinciding with said direction normal to a surface of either substrate.

By having the holes coincide a high optical density of the scattering or dark state is achieved.

According to at least one exemplary embodiment of the present invention, said holes are circular.

When the holes in the second electrodes are circular, then the lines of the generated local AD-FFs have uniform azimuthal distribution around the centre of each hole, i.e. possess an azimuthal symmetry. AD-FFs result in a viewing angle independent images displayed by the device according to the present invention.

The holes may also be hexagonal, diamond-shaped, quadratic or any other geometric shape.

According to at least one exemplary embodiment of the present invention, said holes have a uniform distribution.

The uniform distribution of the holes on the second electrodes results in uniformity of the displayed images by the device, according the invention.

According to at least one exemplary embodiment, at least one of said first and second substrate is flexible.

By having flexible substrates, the device is made flexible and can e.g. be used on non-flat surfaces.

According to at least one exemplary embodiment of the present invention, one of said first and second substrates is transparent and one of said first and second substrates is a mirror.

In this case the device according the invention will work in light reflection regime. Instead of mirror, the non-transparent substrate could be a strongly light scattering substrate, e.g. a diffuser.

According to at least one exemplary embodiment of the present invention, said device further comprises at least one photovoltaic semiconductor conversion layer.

Having the device comprise at least one photovoltaic semiconductor conversion layer, AD-FFs will be generated around the holes under illumination with light and switch accordingly the liquid crystal molecules.

According to at least one exemplary embodiment of the present invention, said device further comprises two polarisers, wherein said first substrate, said second substrate and said liquid crystal layer is sandwiched between said polarisers.

Reorientation of the liquid crystal molecules by external fields, such as electric, magnetic, optical, etc., is often visualised by means of polarisers, linear, circular and transflective. The polarisers may e.g. be circular polarisers, linear polarisers, or a combination thereof.

According to at least one exemplary embodiment of the present invention, said polarisers are circular or linear.

Switching off the liquid crystal from one configuration to another can be visualised by linear or circular polarisers due to the birefringent optical properties of the liquid crystals. It can be used one polariser or pair of such polarisers, depending on the electro-optic effect utilised in the device.

According to at least one exemplary embodiment of the present invention, the liquid crystal layer comprises a polymer network having a pronounced splay-bend structure around said holes of said layered structured of said first and second portions.

The molecules of nematic liquid crystal, with positive dielectric anisotropy (Δ*ε*>0) orient along the AD-FFs lines, generated around each hole in the layered electrode, thus forming splay/bend deformation of the nematic liquid crystal around holes. Dissolving a photo-reactive monomer and proper photo initiator in the nematic liquid crystal, the molecules of this monomer will follow the alignment of the liquid crystal molecules around the holes when electric field is applied. If a sample containing layered electrode, with holes in the second electrode, is filled with nematic liquid crystal with Δ*ε*>0, in which is dissolved photo reactive monomer and photo-initiator, and such a sample is illuminated by UV light, when the sample is in field-on state, the phoreactive monomer will form polymer network, with splay/bend structure, which remains after switching off the applied field. In field-off state the polymer network, with such a splay/bend structure, will induce splay/bend deformation of the liquid crystal in direct contact with the network and thus will induce flexoelectric polarisation P_{flexo}. Such flexoelectric polarisation existing in the liquid crystal samples will facilitate the relaxation of the liquid crystal when the applied electric field is turned-off.

Another object of the present invention is to memorise temporally or permanently the displayed information.

According to at least one exemplary embodiment the liquid crystal, enclosed in the device, is, but not limited to, polymerisable nematic, which for some application could be photo-polymerisable, i.e under an applied electric field, the generated AD-FFs, around the holes in the second electrode, generate an image, which becomes permanent after illumination of the device with light with a proper wavelength, due to photo-polymerisation of the nematic. Another liquid crystal materials, which can be polymerised permanently, under temperature, radiation (x-ray, electron beam, etc.), could be used as well.

In another exemplary embodiment, the liquid crystal enclosed in the device, enabling the temporal memorization of the displayed image, generated by AD-FFs around the holes in the second electrode of the layered electrodes in the device, through but not limited to gelation or hydrogen bounding of the liquid crystal by temperature or irradiation, such as x-ray, electron beam, etc.

The liquid crystal later may also comprise at least one dichroic dye.

The liquid crystal layer may also comprise Blue Phase (BP) liquid crystals.

According to at least one exemplary embodiment of the present invention, the device is electronically driven by an active TFT matrix.

TFT matrix electronic driving is widely utilized in conventional LCDs. However, the alignment of the liquid crystal within each TFT pixel has one or several preferred direction but not azimuthally degenerate alignment providing independent viewing angle images. By introducing holes in the second electrode of the layered electrode structure of each TFT element for generating AD-FFs, the generated images will be with constant contrast, being viewing angle independent.

According to a second aspect of the present invention, a liquid crystal device is provided, said device comprising a substrate on which an electrode structure is deposited, said electrode structure comprising: a first electrode layer; an insulating layer; a second electrode layer; wherein said second electrode layer comprises holes for generating local fringe fields with azimuthal degenerate direction around each hole, and wherein said liquid crystal device further comprises a liquid crystal layer being permanently or temporarily polymerizable.

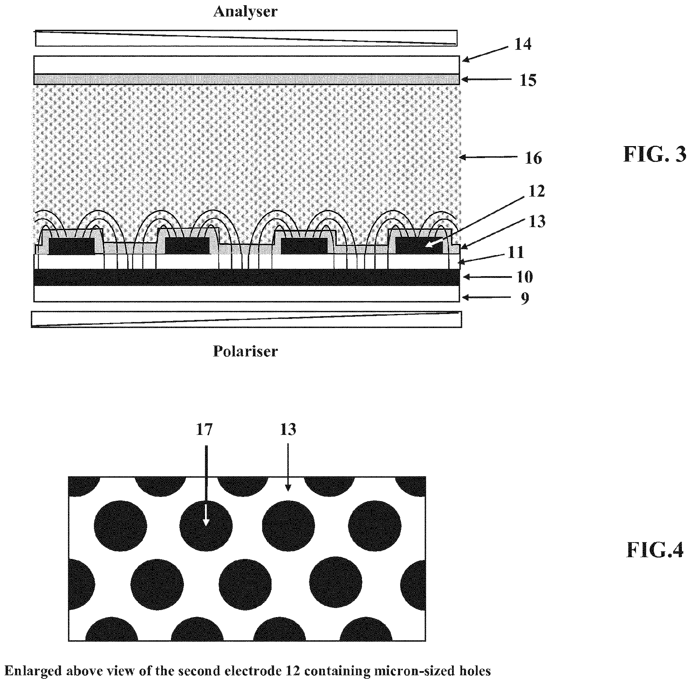

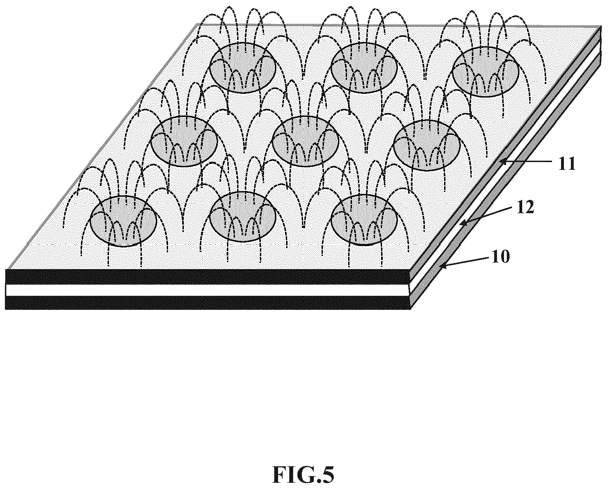

The liquid crystal device, according the to the invention, may comprise a plurality of pixels. Each pixel contains a layered electrode, deposited on one of the substrates (for instance substrate 9), which structure comprises common electrode 10, usually made of transparent conductive material, such as ITO (Indium Thin Oxide) or metal, such Al, Cr, etc., on top of which is deposited thin insulation film 11, such as SiOx or Si3N4, followed by deposition of second electrode 12, which can be either transparent or not, being reflective or non-reflective. The second electrode has openings, within which there is no any conductive material, the second electrode is made from. These openings are further called holes. The role of the layered electrode with second electrode, having holes, is to enable generation of AD-FFs and to shape the fringe fields over the second electrode of the device. The holes may have the same or different forms, such as triangular, hexagon, circle (FIG.4), square, etc. The size of the holes and their distribution over the second electrode area depends on the requirements of the liquid crystal device, wherein the layered electrode, according to the innovation, containing a second electrode with holes, is used. For some applications, such as liquid crystal displays, for instance, holes with circular form, with size in the micrometers range and uniformly distribution over the area of second electrode, are preferably to be used. For illustrating the present invention, such a liquid crystal display, containing only one pixel with layered structure, which second electrode is with holes having circular form and uniformly distribution over the layered electrode, is depicted in FIG.4 and 5.

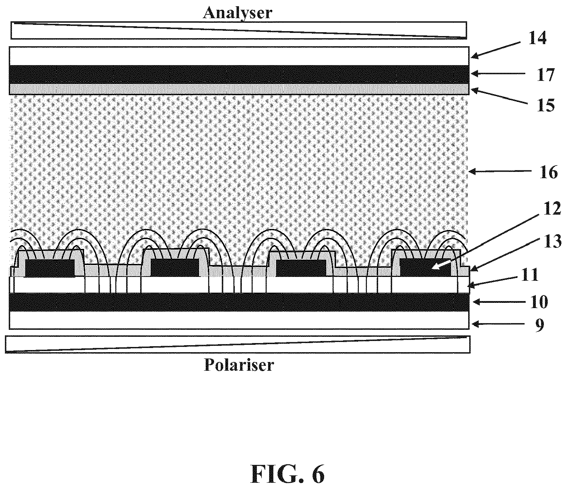

Another object of the present invention is to reduce the field-off relaxation time (fall time), which , according to at least one exemplary embodiment, is achieved by applying an electric field across the liquid crystal layer. For these reason (FIG.6), a single electrode 18 is deposited on the surface of the second device substrate 14, facing the layered electrode deposited on the first device substrate 9. Generated electric field between the single electrode 18 and the layered electrode, is substantially improving the device switching performance as well as enabling efficient erasing of the memorised states.

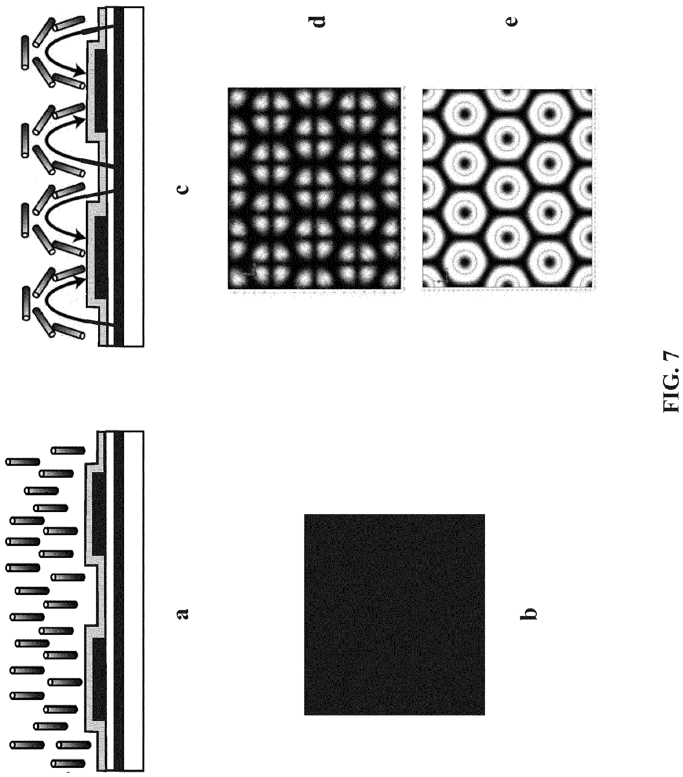

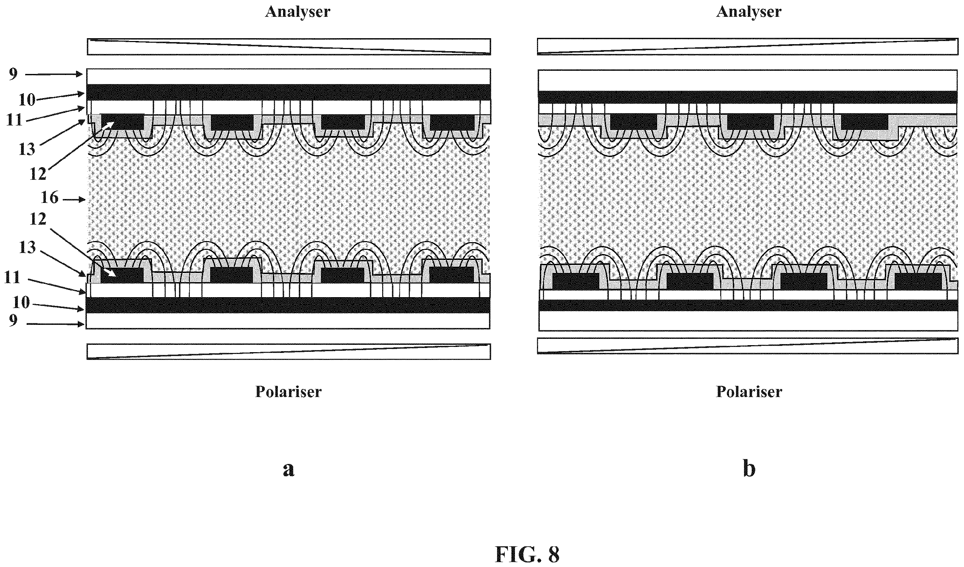

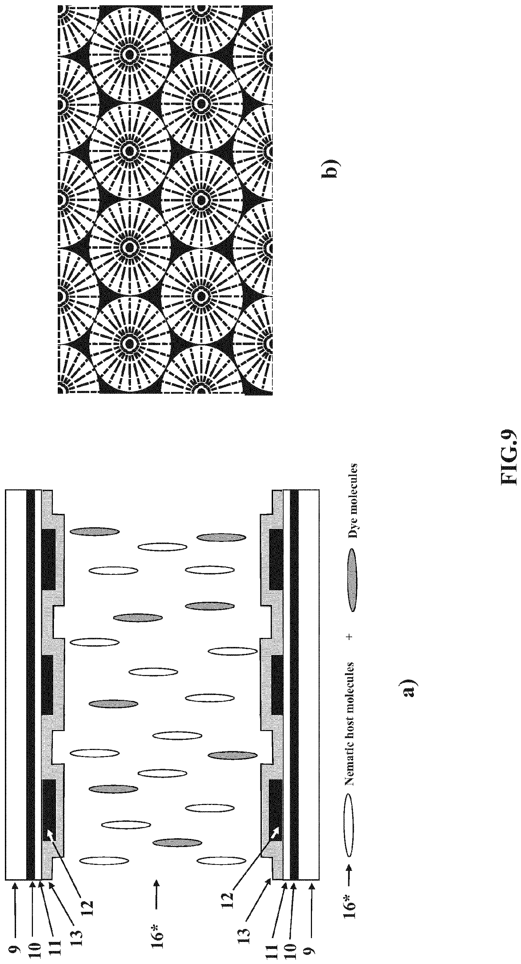

The AD-FFs, generated around the holes in the second electrode of the layered electrode, will provide switching of the liquid crystal molecules to a state, which optical properties in field-on state differs substantially from the one of the field-off state. According to the invention, such a switching, giving rise to a distinguished optical response, is achieved for instance by switching the vertical alignment of the molecules of a nematic liquid crystal (FIG.7a) with positive dielectric anisotropy (Δ*ε*>0) by AD-FFs, in which the device has zero birefringence (isotropic optical properties) (FIG.7b), to field-on state, which is birefringent due to degenerated in-plane alignment the liquid crystal optic axis, resulted from the azimuthally degenerated orientation of the liquid crystal molecules induced by the AD-FFs generated at each hole in the second electrode of the layered electrode (FIG. 5 and FIG. 7c).
Possible ways to achieve the vertical alignment of the liquid crystal in field-off state (FIG.7a) is to use proper treatment of the inner substrates' surface, with which the liquid crystal has contact with and/or use of specific LC and substrates. According to the invention, for visualising the switching between the optically isotropic field-off state of the liquid crystal device and its birefringent field-on state, the liquid crystal device is inserted between two crossed linear or circular polarisers (FIG.7d and e). Hence, the field-off state of the device appears to be DARK (FIG. 7 b), due to VA of the liquid crystal, whereas its field-on state will be BRIGHT, due to the birefringent optical properties of this state, resulted from the locally degenerated in-plane orientation of the liquid crystal molecules with a typical optical configurations when the device is inserted in between crossed linear and circular polarisers, respectively (FIG.7 d and e). Computer simulations showed that the contrast of the displayed images is higher when the liquid crystal device is inserted in between crossed circular polarisers. These images, displayed by the device, according present invention, exhibit, in the case of circular holes in the second electrode distributed evenly over the pixel area, are with constant contrast and angular independent viewing angle of 360º degrees.
An object of the present invention is also to advance and improve the performance of the liquid crystal device, according to the invention, by providing layered electrodes deposited on both substrates' surface 9 and 14. In FIG. 8 is schematically presented such a liquid crystal device, which layer electrodes possess second electrodes with circular holes, which are either coinciding (FIG. 8a) or shifted with respect to each other (FIG. 8b). However, the layered electrodes deposited on both liquid crystal substrates device substrates 9 and 14, may have generally holes with different form, size and distribution over the respective substrates.
Switching of the liquid crystal in the device, according the invention, strongly depends on the anchoring conditions of the substrates' surface, the liquid crystal is in contact with, as well as the initial (field-.off) pretilt of the liquid crystal molecules at the substrates' surface. The anchoring conditions and/or the pretilt angle could be patterned by, for instance, photoalignment, hence hidden images can be imprinted in the device, which become visible after en electric field is applied.
By replacing the nematic in the above described device configuration with smectic liquid crystal, the device will be able to memorise the field on state, after the applied voltage is turned off, and hence resulting in reduction of the power consumption of the device, according to the invention. Moreover such device may not need polarisers as well.
Yet another object of the present invention is to provide a liquid crystal device switching between bright and dark state without using either linear or circular polarisers, which otherwise are necessary to manage light or to display information by light shutters, goggles, helmets, displays, photonics devices, etc., thus improving their optical performance and decreasing the power consumption of the illumination unit of the device, working in tight transmission mode. In order to realise such a device, in the liquid crystal material 16, enclosed in between the two substrates of liquid crystal device 9 and 14, according the invention, is dissolved a single dopant or mixture of such dopants, possessing anisotropic molecular structure and thus anisotropic light absorption along a direction parallel, orthogonal or tilted with respect to the dopant's long molecular axis. As such dopants could be used dichroic dyes, nano-roads, etc. For instance, in a mixture of nematic liquid crystal and dichroic dye (FIG.9a), the so-called guest-host mixture GH [liquid crystal(host) containing dye(guest)], the dye molecules are aligning along the long axis of liquid crystal molecules.

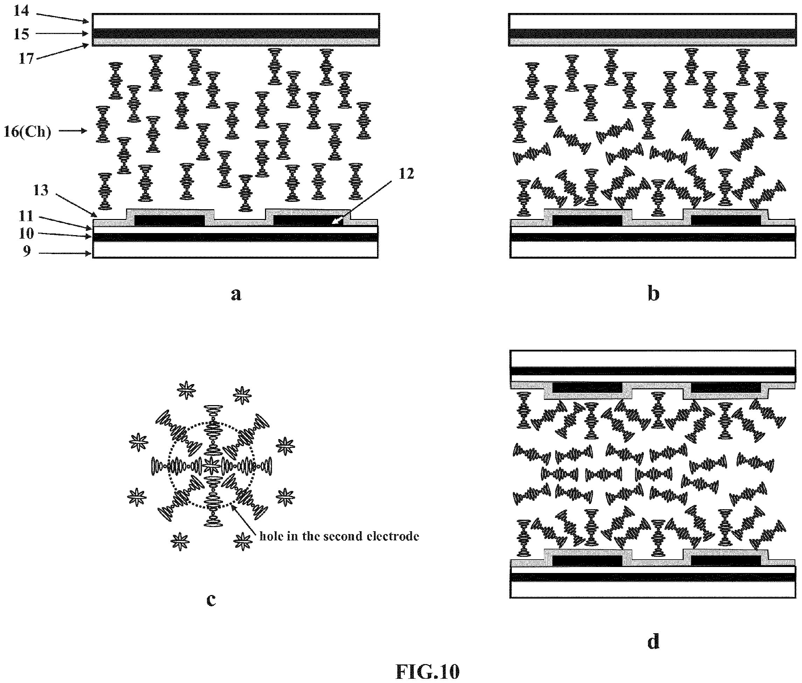

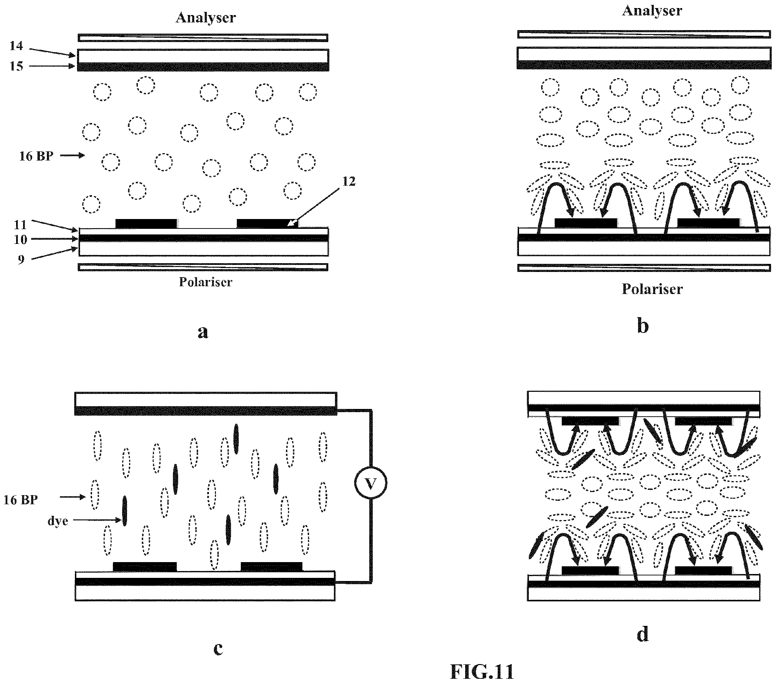

The GH mixture may contain more than one single dichroic dopant as a guest. Depending on the field of application, the dichroic dopant or mixtures of dopants can be chosen to have a pronounced light absorption in different region of the light wavelength spectrum - UV, visible and infrared, respectively. If the inner surface of the device substrates are treated to promote vertical alignment (VA) of the liquid crystal containing a dichroic dye (or dyes mixture), which absorption axis is along the substrate normal, then the light absorption of the dichroic molecules is minimal in the vertically aligned liquid crystal 16 and, therefore, the field-off state is BRIGHT (FIG. 9a). In field-on state, however, the generated AD-FFs by the second electrode of the layered electrodes of the device, according the invention, impose on the molecules of the nematic liquid crystal 16, a locally azimuthal degenerated orientation around each hole of the second electrodes 12, if the liquid crystal has positive dielectric anisotropy, i.e. Δ*ε*>0. Hence, in the field-on state, the orientation of the dye molecules becomes locally in-plane degenerated and therefore the light absorption of the dye molecules is maximum in such liquid crystal alignment texture and the field-on state therefore appears DARK (c.f. FIG. 9b, which represents a negative image, i.e. the DARK image corresponds to the BRIGHT one in reality). By replacing the nematic material in the GH mixture with a smectic liquid crystal host, then the field-on state would be memorised, hence reducing the power consumption of such a device.
No any polarisers is needed when the liquid crystal material in the liquid crystal device, according to the invention, is cholesteric, a liquid crystal possessing a helical molecular order. In this case planar anchoring conditions should be provided for orientating the cholesteric liquid crystal with helix axis lying along the device substrates' normal forming thus Grandjan texture, the so called Uniform Standing Helix (USH) texture (FIG.10 a), which is a selectively reflecting light cholesteric texture. When an electric field is applied to the liquid crystal device, the generated AD-FFs around the holes in the second electrode of the layered electrode results in alignment of the cholesteric in a texture with a degenerated azimuthal distribution of the helical axes around the holes (FIG.10b, c). i.e. the cholesteric will adopt a texture, which is strongly scattering light texture which remains after the generated AD-FFs are switched-off. It is advantageous to deposit also layered electrode on the other substrate of the device (double layered electrode structure device) (FIG. 10 d). Memorising the field-on state in the liquid crystal device, according the invention, reduces substantially the energy consumption of the device. The scattering state of cholesteric can be erased by application of electric field across the liquid crystal layer, i.e. along the device substrates' normal generated between the electrodes deposited on both device substrates 9 and 14, provided the cholesteric liquid crystal is with negative dielectric anisotropy Δ*ε*<0. If the dielectric anisotropy of the cholesteric liquid crystal is positive Δ*ε*>0, then the substrate surface should provide anchoring conditions promoting alignment of the cholesteric in uniform lying helix (ULH) texture.
To provide a fast switching liquid crystal device with field-off state being optically isotropic, i.e. which appears dark when the device is inserted in between two crossed polarisers, linear or circular, and becoming bright (transparent) in field-on state, is also an object of the present invention, achieved by using a Blue Phase (BP) liquid crystal material (those materials are with very short pitch helical molecular order along three orthogonal directions. The liquid crystal device, according to the invention, works whether it is placed in between crossed polarisers, when contains only BP liquid crystal (FIG 11a, b), or without polarisers, when dye(s) is dissolved dye(s) in the BP liquid crystal. Another object is to provide each pixel of a FFS LCD (Fringe Field Switching LCD), with TFT electronic driving, with a layered electrode, which second electrode has holes for generating AD-FFs. In case of circular holes with uniform distribution over the pixel area, the switching of the liquid crystal in the device, according to the present invention, will provide 360º degrees viewing angle with constant contrast.
Other objective is to provide X-Y electrode matrix driving of the layered electrodes, according to the present invention, wherein the Y column electrodes of the X-Y electrode matrix are playing the role of second electrode with holes, whereas the X row electrodes are playing the role of common electrodes and they are separated from each other by insulation layer placed in between them.

Yet another object of the present invention is to improve the switching performance of the liquid crystal device, which is realised by incorporating a polymer network within the liquid crystal layer 16, which may have evenly distribution in the liquid crystal bulk or being substantially localised at the substrates' surface in contact with the liquid crystal. This polymer network might be loose or dense, temporal or permanent.
Another object of the present invention is the properties, form and material the substrates of the liquid crystal device is made from. At least one of the device substrates is preferably be transparent. Both device substrates can be made of glass or plastic (rigid or flexible), or combination thereof. The liquid crystal device according to the invention might be flat or curved.
Proper alignment of the liquid crystal in the device is another object of present invention. For certain application purposes the molecular orientation in the liquid crystal layer 16, promoted by the alignment layers 13 and 15, respectively, over the entire device area should be uniform, planar, tilted, vertical or hybrid (the alignment layers 13 and 15, deposited on the device substrates may promote different alignment - planar and vertical, respectively). For other application purposes the alignment layers 13 and 15, respectively, may promote alignment of the liquid crystal at the device substrates resulting splay, bend or twist liquid crystal configuration in the device, according to the invention. Moreover, for some other application purposes, such as liquid crystal devices with curved substrates (e.g. goggles), the alignment layers 13 and 15, respectively, may promote alignment of the liquid crystal, which has a nonuniform character over the device area, i.e. the liquid crystal alignment in different device pixels is different. Moreover, the alignment material used for preparation of alignment layer in the present invention could be made from photo alignment material.

### Brief description of the drawings

FIG.1A Cross-section of liquid crystal device, a prior of art, with electrode pattern for generating fringe field (FF), resulting Fringe Field Switching (FFS) of the liquid crystal.
FIG.2 Is a perspective view of a prior of art liquid crystal sandwich cell, containing an electrode pattern for generating FF. The alignment layers deposited on the inner substrates' surface is not shown.
FIG.3 Is a cross section of one pixel electrode liquid crystal device, according to the invention, containing a layered electrode for generating AD-FFs, deposited on one of the substrate surface, which has circular holes in the second electrode, shown in FIG.4.
FIG.4 Magnified above view of a small area of the second electrode, containing holes 17 with circular form and uniform distribution over this electrode area.
FIG.5 Perspective view of the generated AD-FFs by the layered electrode structure with second electrode having circular holes 17 (only the layered electrode is depicted).
FIG.6 Is a cross section of one pixel electrode liquid crystal device, according to the invention, containing a layered electrode, which has holes in the second electrode, shown in FIG.4, for generating AD-FFs, resulting in AD-FF switching (AD-FFS) of liquid crystals.
FIG.7 Schematic presentation of: a) field-off vertical orientation of liquid crystal molecules in the liquid crystal device, according to the invention (only the liquid crystal vertical alignment in the region adjacent to one of the substrates, bearing the layered electrode, is depicted). b) view of the device in field-off state placed between crossed linear polarisers, c) Feld-on orientation of the molecules of nematic liquid crystal, with positive dielectric anisotropy (Δ*ε*>0), at the substrate bearing the layered electrode structure with holes in the second electrode for generating of AD-FFs. View of the device in field-on state placed between d) crossed liner polarisers and e) crossed circular polarisers.
FIG.8 Is a cross section of a liquid crystal device, according to the invention, with layered electrodes for generating AD-FFs, deposited on both inner substrates' surface, which holes in the second electrode a) coincide and b) are shifted with respect to each other.
FIG.9 Is schematically illustrated a) cross section of a liquid crystal device, according to the invention, which contains a nematic liquid crystal with positive dielectric anisotropy (Δ*ε*>0) mixed with a dichroic dye and oriented in the field-off state vertically with respect to the device substrates. Field-off state of the device appears to be bright, due to the vertical orientation of the dichroic dye, with slight coloration, depending on the dissolved dye, b) Field-on state of the device. Negative (inverted) image of an amplified above view of an area of the liquid crystal device, in which the liquid crystal molecules, and thus the dichroic dye molecules, are oriented along the lines of the generated AD-FFs by the electrode structure illustrated in FIG.4. (The white areas in the negative image corresponds to the dark ones in reality). Due to the degenerated local azimuthal distribution of the dye, the circular holes in the second electrode in the structure of the layered electrode appears dark (their dark colour depends on the dye), whereas the areas between the holes appears brighter with slight colouration.
FIG.10 a) Cross section of field-off state of a cholesteric liquid crystal device, containing layered electrode structure, which has circular holes in the second electrode for generating AD-FFs, deposited on one of the device substrates, and a single electrode deposited on the other device substrate. The cholesteric liquid crystal is aligned in Uniform Standing Helix (USH) texture, which exhibits selective reflection of the light. b) Field-on state of the cholesteric device. AD-FFs-induced light scattering texture (focal conic "FC " texture) of the cholesteric liquid crystal layer. c) Schematic presentation of the above view of the cholesetric helix distribution around one circular hole in the second electrode in field-on state. d) Field-on state of the cholesteric device containing layered electrode structures deposited on both device substrates.
FIG.11 Cross section of the field-off state of a liquid crystal device, according to the invention, containing Blue Phase (BP) liquid crystal with positive dielectric anisotropy (Δ*ε*>0) and inserted between two crossed polarisers. a) In field-off state, BP has optically isotropic properties (represented by sphere) and therefore, is dark. b) In field-on state, above a threshold voltage, the BP becomes birefringent (birefringent optical properties are represented by ellipsoid) and behaves as nematic with azimuthal degenerate alignment around the electrode holes, i.e the field-on state of the device is bright. c) Cross section of the field-on state of the liquid crystal device, as depicted in a) but without polarisers and containing BP, in which a dichroic dye is dissolved. In the field-on state (the electric field is applied across the BP liquid crystal layer 16, the device possesses birefringent properties (represented here by the optical ellipsoids) and, therefore, is transparent with slight colouration. d) Schematic presentation of the field-on state of the device, with layered electrodes deposited onto both substrates, filled with BP containing a dichroic dye. The field-on state of the device, in which AD-FFs are generated by the layered electrodes, is dark with certain colouration.
FIG.12 Magnified above view of 4-pixels LCD, according to the invention, in which the common electrode of the layered electrode structure is joint for all 4 pixels and the holes in the second electrode are circular and uniformly distributed over the second electrode area. Each pixel may also have its own common electrode.
FIG.13 X-Y matrix driven layered electrodes with holes in the second electrodes (column Y), according to the present invention.
FIG.14 A magnified area of a layer electrode with X-Y matrix structure, deposited on a substrate (rigid or flexible, transparent, scattering or reflective), which pixels contains only one hole, which generally could be also a plurality of holes (c.f. FIG.13). On top of the electrode is deposited alignment layer (not shown) covered by layer of photo-reactive liquid crystal layer 19 (FIG.14 b). Applying voltage to selected pixels by appropriate driving of X-Y electrode matrix, the field-on state of these pixels will be memorised by illuminating the substrate with UV light, for instance.

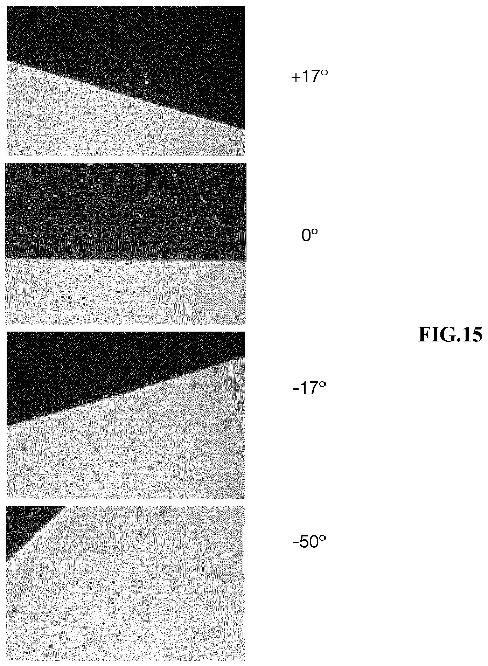

FIG. 15 Polarising microscope (PM) photos of one pixel sample contain a layered electrode deposited on one of the substrates with circular holes in the second electrode. The holes have diameter 10*µ*m and are uniformly distributed over the the second electrode at distance 10*µ*m from each other. As seen, no changes of the brightness of the field-on state are observed when the sample is rotating between crossed polarisers, indicating constant contrast image with angular independent viewing angle, i.e. 360º viewing angle.

### Detailed description of the preferred embodiments

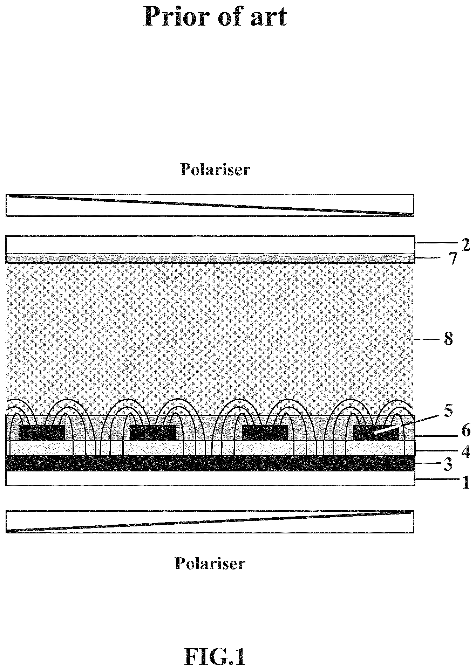

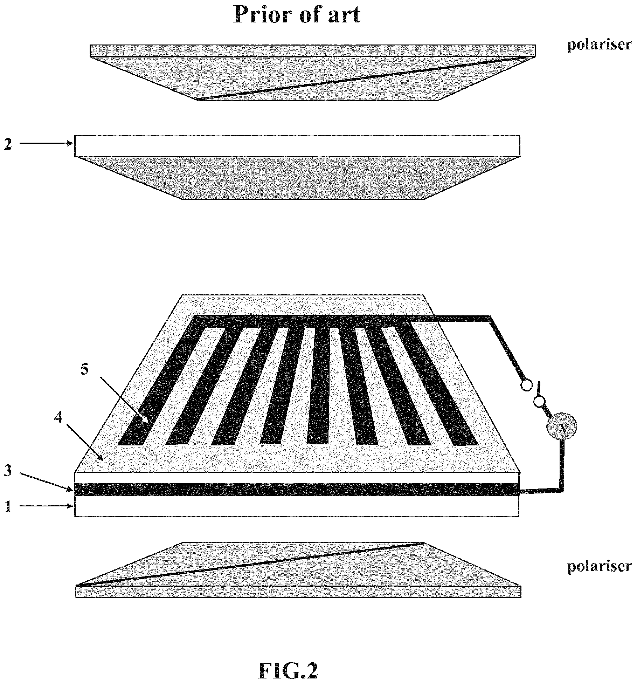

In FIG. 1 and 2 is depicted a conventional LCD, according to prior of art, comprising two parallel glass substrates 1 and 2 assembled in a sandwich cell with predeterminate distance between them. On one of the inner substrates' surface facing to each other is disposed a layered electrode structure, which is generating fringe fields (FFs) for liquid crystal switching, the so-called Fringe Field Switching (FFS). The layered electrode structure comprises common electrode 3, which is covered by insulation layer 4 followed by deposition of transparent second comb-like electrodes (in form of parallel stripes, for instance) 5 (FIG.2). On the top of the inner substrates' surface is deposited alignment layer 6 and 7. The FFs are generated between the common electrode 3 and second electrodes 5. The generated FFs are switching the molecules of liquid crystal 8, enclosed in between the two device substrates 1 and 2, which takes place essentially in between the stripes of the second electrode. However, the anisotropy of the switching direction of the liquid crystal molecules makes the viewing angle of the generated images angular dependent. Replacing the linear stripe electrodes in this electrode structure with chevron-like electrode structure, reduce substantially the angular (azimuthal and polar) dependence of the viewing angle but it doesn't remove it completely! Hence, in order to remove the viewing angle dependency, the switching of the liquid crystal molecules should take place equally in all directions.

Moreover, the majority of conventional transmissive LCDs needs also two polarisers. However, this polarisers reduce the intensity of the transmitted light to about 50%. Therefore, there is also need of LCD modes, which do not require any polarisers resulting in a reduction of the power consumption of the back light illuminating source, a very important issue especially for portable electronic devices with incorporated LCDs. The use of dichroic days, for instance, having anisotropic absorption or reflecting properties, dissolved into the liquid crystal, is enabling to remove one or both polarisers of the LCD, thus improving the light transmission characteristics of LCD. [Heilmeier, G. H.; Zanoni, L. A. Guest-Host Interactions in Nematic Liquid Crystals. A New Electro-Optic Effect. Appl. Phys. Lett.,1968, 13, 91-92]. However, other absorbing objects, such as nano-rods for instance, with anisotropic light absorption properties in different light spectrum regions (UV, visible, infra-red) can be used as well.

The first embodiment, according the invention, is a liquid crystal device, schematically illustrated in FIG.3 representing one pixel electrode device, comprising: two confining substrates 9 and 14, such as glass or plastic (rigid or flexible), which could be flat or curved substrates, at least one of them transparent, a liquid crystal bulk layer 16 arranged between said substrates 9 and 14. An electrode for generating azimuthally degenerated fringe fields (AD-FFs), depicted in FIG.3, is deposited on the inner surface of one of the device substrates 9. This electrode has a layer structure comprising of common electrode 10, insulation film 11 and second electrode 12, with circular holes 17, for instance, which are uniformly distributed over the pixel electrode area, as illustrated in FIG.4. The layered electrode, containing circular holes 17 in the second electrode, is generating azimuthally degenerated fringe fields (AD-FFs), uniformly distributed over the pixel area with azimuthally degenerated direction around the holes 17 (see FIG.5). The form of the holes could be also hexagon, square, triangular, etc. On top of the layered electrode, deposited on substrate 9, and on the inner surface of other substrate 14, is deposited alignment layer 13 and 15, respectively, for promoting a certain type of alignment of the liquid crystal 16, required by the liquid crystal switching mode used in the device, according to the present invention.
A skilful person may choose another form of the holes in the second electrode and provide different distribution of the generated AD-FFs over the device work area for achieving a particular device performance.
Another embodiment of the present invention is a liquid crystal device comprising two confining substrates 9 and 14 one of them bearing a layered electrode structure with holes in the second electrode, for generating AD-FFs , whereas on the other substrate surface, facing the layered electrode, is covered by a single electrode 18 (FIG.6). On both electrodes are deposited alignment layers 13 and 15, respectively, promoting for this particular purpose vertical alignment (VA) of the liquid crystal 16 enclosed between the confining device substrates 9 and 14 (FIG.7a). Therefore, the device inserted in between two crossed linear or circular polarisers appears dark (FIG.7b). The liquid crystal in this particular case is a nematic with positive dielectric anisotropy (Δε>0) and therefore the liquid crystal molecules will align along AD-FFs lines (FIG.7c). Inserted between two crossed linear or circular polarisers, the liquid crystal device, according to the invention, will switched from dark field-off state (FIG.7a, b), due to field-off vertical alignment of the liquid crystal, to bright state (FIG.7c-e), in which the liquid crystal molecules will be oriented along the FF lines (FIG.7c) and hence will adopt azimuthally degenerated alignment of the local position of the liquid crystal optic axis. The bright state of the liquid crystal device, arising from the generated azimuthal orientation of the liquid crystal optic axes around the holes, provides 360º azimuthal viewing angle with constant contrast. When crossed circular polarisers are used, much better contrast is achieved than with crossed linear polarisers (FIG.7e, d). Adventitiously, the presence of electrodes on the both substrates in this embodiment makes it possible to apply electric field between the layered electrode on substrate 9 and the single electrode on substrate 14, enabling thus to reduce substantially the relaxation time of the liquid crystal after switching-off the AD-FFs.
Another embodiment of the present intention is a liquid crystal device, according to the invention, in which on both substrates' surfaces, facing to each other, are deposited layered electrodes (FIG. 8a and b). The substrates of such liquid crystal device are assembled in such way that the holes in the second electrode of the layered electrode structures, deposited on both substrates, for certain applications either coincide (FIG.8a) or not (FIG.8b).
In another embodiment of the invention instead of nematic liquid crystal, smectic liquid crystal may be used. In this case the switched-on state could be advantageously memorised and no polarisers are needed for visualisation of the displayed information
Another embodiment of the present invention is a liquid crystal device, which also does not require any polarisers. The device comprises a nematic liquid crystal and for this particular application a dichroic dye(s) is (are) dissolved in the nematic, forming guest-host (GH) nematic liquid crystal mixture. Specific features of the used dichroic dye(s) is that it (they) absorb strongly light, which polarisation is along their long axis (positive dichroism) or perpendicular to it (negative dichroism). By proper choice of dye or combining properly the dyes dissolved in the liquid crystal, different absorption colours of the guest-host mixture could obtained. The liquid crystal device according to this embodiment of the invention has the same device architecture as the one of the previous embodiment illustrated on FIGs 3-8. In the field-off state of the device, the orientation of the molecules of GH liquid crystal mixture, and thus of the dye molecules, is along the device substrates' normal, i.e. perpendicular to the device substrates (vertical alignment) (c.f. FIG. 9a). The dissolved dye(s) in the GH mixture is(are) possessing positive dichroism, which absorption in the field-off state, i.e. when the dye(s) molecules are oriented vertically with respect to the device substrates, is minimum and the GH liquid crystal mixture appears bright with certain coloration, depending on the dissolved dye(s). Under an applied electric field, the generated AD-FFs switch the molecules of GH liquid crystal mixture from vertical alignment to degenerate azimuthal alignment around the holes in the second electrode. Such alignment of the GH molecules results in enhancement of the light absorption and the liquid crystal device, according to the present invention, appears dark (FIG.9b). The colouration of this dark state, likewise the bright state, depends on the type of dissolved dye(s). Big advantage of the liquid crystal device with holes in the second electrode, filled with GH nematic liquid crystal mixture, is that the device does not need any polarisers, which result in a substantial enhancement of the device brightness! Advantageously for certain applications, the liquid crystal device, with circular holes in the second electrode and filled with GH liquid crystal mixture, according to the invention, is that it has improved optical characteristics, such as 360º degrees azimuthal viewing angle with constant contrast and enhanced brightness. For different application purposes the dichroic dopants may be selected to have absorption peak either in UV spectrum of the light or in the visible or IR spectrum.
According to another embodiment, the nematic liquid crystal host in the GH liquid crystal mixture is replaced by smectic liquid crystal. As consequence, the switched-on state of the device remains after the applied voltage to the layered electrode is turned-off, i.e. the device field-off state becomes memorised.
According another embodiment of the present invention, in the liquid crystal device, described in the above embodiments, is formed a polymer network either by thermal-polymerisation or photo-polymerisation, or other polymerisation techniques such as radiation polymerisation, for instance. For certain applications is advantageously to use photo-polymerisation, according to which a certain small amount of photo-reactive monomer and photo-initiator are dissolved in the liquid crystal material 16 filling the space in between the device substrates 9 and 14. A weak electric field is applied to the liquid crystal device, so that AD-FFs are generated close to the electrodes and capable to switch the molecules of the liquid crystal mixture from the vertical alignment to locally degenerate azimuthal alignment but only within a tiny sub-region of the liquid crystal layer adjacent to the substrate. The strength of the applied electric should be such that the thickness of this sub-region is equal or smaller than the wavelength of the incoming light. The liquid crystal device is then exposed to UV light illumination and a polymer network from the photo-reactive monomer is formed into the liquid crystal layer 16. Such a polymer network, formed under application of weak electric field, stabilises the alignment of the liquid crystal molecules in this field-on state. Whereas the alignment of the liquid crystal molecules in the bulk, under application of such weak electric field will remain to a large extend vertical, within a sub-region of the liquid crystal layer, adjacent to the substrate bearing layered electrode, the molecules adopt alignment following the AD-FFs lines, i.e. alignment comprising splay and bend deformations with the periodicity of the holes in the second electrode and deformation planes containing the AD-FF lines, i.e. being with local azimuthal degenerated orientation around the electrode holes. According to the present invention, after the applied electric field is turned-off, these splay-bend deformations of the liquid crystal 16 remain, due to the polymer network formed in the liquid crystal under UV light illumination in the field-on state of the liquid crystal device. However, as it is known, the splay and bend elastic deformations of the liquid crystals give rise of flexoelectric polarisation Pflexo, which depends strongly on the strength of the curvature of spay-bend elastic deformations and liquid crystal material properties (i.e. the flexoelectric coefficients for splay and bend deformation of the liquid crystal). As seen from FIG.5 and 7c, the spay-bend deformations are quite strong, which means that the induced P_{flexo} will be also large. P_{flexo} in this embodiment is oriented perpendicular to the device substrates. When flexoelctric constants for splay and bend elastic deformations has the same sign then P_{flexo} might be substantial and would strongly affect (facilitate) the relaxation process taking place in the field-off state! In the above described embodiment, containing a polymer network, such splay-bend deformations exist permanently around each hole in the second electrode, giving rise to P_{flexo} being oriented along the substrate normal. Advantageously, the polymer network stabilisation of the splay-bend deformations, around the holes in the second electrode, will speed up the relaxation process in the described above embodiments of the present invention.

Yet another embodiment of the present invention is a liquid crystal device wherein a cholesteric liquid crystal is used instead of nematic (FIG.10). As known the molecules of cholesteric liquid crystal possess a helical order, with helix axis perpendicular to the long axis of the molecules. Due to helical molecular order, the cholesteric liquid crystal exhibits optical properties different from those of nematic, such as selective light reflexion and rotation of the light polarisation. In a sandwich cell, cholesteric liquid crystal may adopt in field-off state different kind of textures, depending on the surface anchoring conditions. These textures are generally bistable and the orientation of their helix axis with respect to the confining substrates is different:
- Texture with helix oriented orthogonal to the substrates, so called uniform standing helix (USH) texture.
- Texture with helix uniformly alignment in the plane of the substrates, so called Uniform Lying helix (ULH) texture, in which the helix is oriented parallel to the confining device substrates and it is aligned in unique direction.
- Texture with helix randomly tilted (conical) orientation, so called Focal Conic (FC) texture.
When the cholesteric is with short pitch, shorter than the wavelength of the incident light, USH and ULH textures do not scatter light, whereas the FC texture is strongly scattering the incident light. These cholesteric textures are bistable and the switching between them is possible by applying an electric field with appropriate strength, form and frequency. According to the invention, the cell gap of the liquid crystal devices illustrated in FIG.3 and 6 is filled with short pitch cholesteric liquid crystal 16. Alignment layer deposited onto the inner substrates' surfaces, promoting planar alignment, results in USH texture of the cholesteric (FIG.10), i.e with helix along the substrate normal and liquid crystal device exhibits selective light reflection but is optically transparent for the rest of the light spectrum, hence it appears optically transparent. For certain application purposes, the liquid crystal device, according to the invention, may have layered electrode with circular holes in the second electrode, uniformly distributed over the layered electrode area, deposited onto one or onto both of device substrates (FIG.3, 6 and 10). AD-FFs generated by the layered electrode have local azimuthal degenerate directions around the holes.

Therefore, in the field-on state, the orientation of the cholesteric is changed from field-off USH texture, with helix being vertical to the substrate (FIG.10a), to a texture with randomly(conically) oriented tilted helix (FIG.10b-d). However, the cholesteric in conically oriented tilted helix (FC) texture scatter intensively the incoming light and the light scattering state has 360º azimuthal viewing angle with constant contrast. The field-on state is also bistable, i.e. it remains after switching off the applied electric field. Hence, the device according the invention switches from fully (ULH texture) or partially transparent (USH texture) state to fully scattering state (FC texture), which is bistable and has 360º degrees azimuthal viewing angle with constant contrast. Switching back to ULH or USH (the transparent state field-off state) is realised by applying a proper electric field between the electrodes deposited onto both device substrates (e.g. FIG.6, 8 and 10).
Another embodiment of the present invention is a fast switching liquid crystal device, containing Blue Phase (BP) liquid crystal material, which , as known, have a short pitch helical molecular order along three orthogonal directions and therefore appears optically isotropic, i.e. optical properties represented by sphere (FIG.11a). An applied electric field unwind the helical molecular order above a certain threshold voltage, likewise in cholesterics, and the BP material becomes optically equivalent to nematic liquid crystal, i.e. exhibits birefringence, represented by uniaxial ellipsoid (FIG.11b). Therefore, inserted in between two crossed, linear or circular polarisers, the liquid crystal device containing BP liquid crystal appears dark in the field-off. However, the field-on state of this device is bright, due to field-induced birefringence. Moreover, due to the azimuthal degeneracy of the AD-FFs, generated around the holes in the second electrode of the device layered electrode, the field-on bright state of the device appears viewing angle independent with constant contrast. A particularly important feature of this device is that the relaxation process, after turning-off the applied field, is very fast, due to the short pitch helical molecular order. Since the switching-on time dependents on the magnitude of the applied electric field, switching on- and off- times of this device, according to the present invention, are very fast.

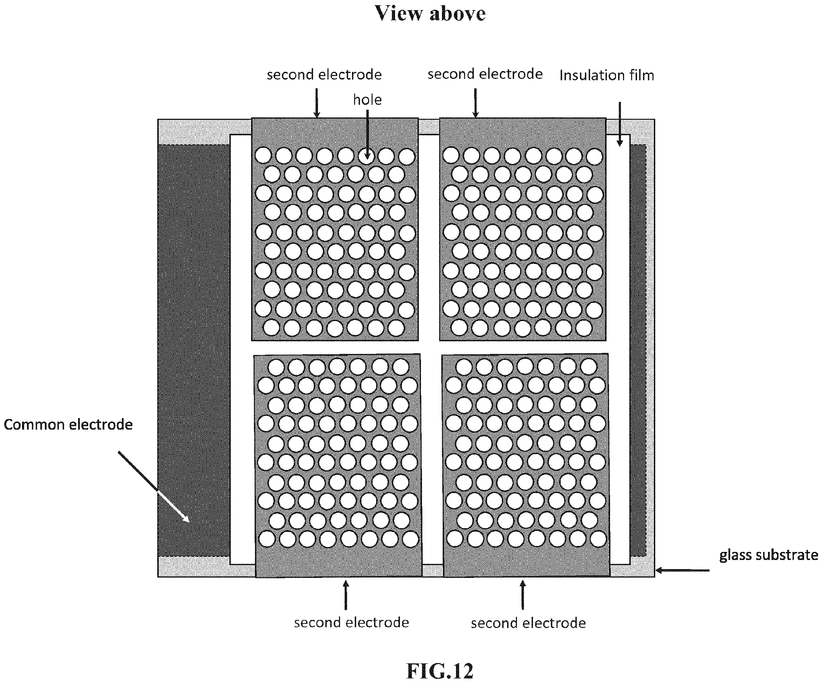

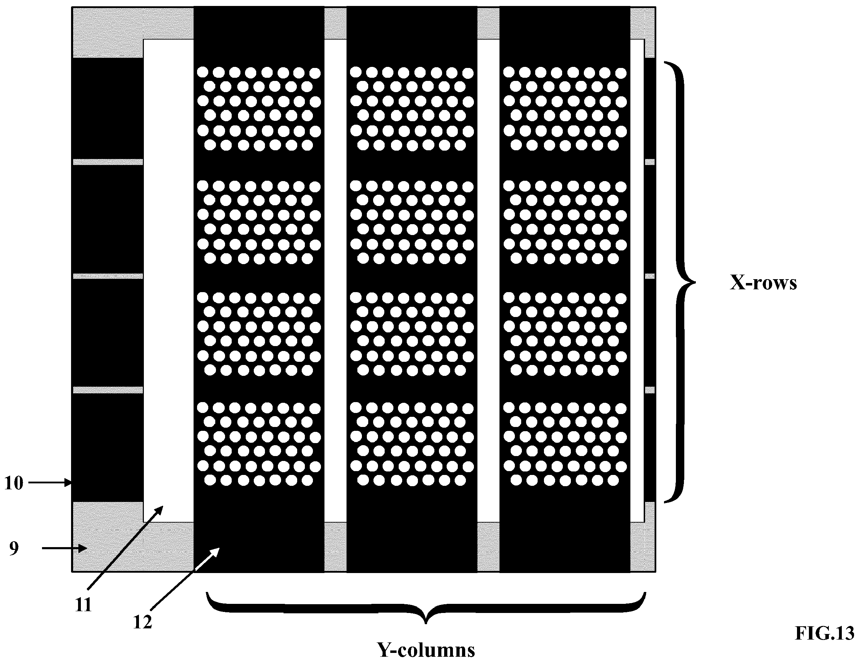

Dissolving dichroic dye(s) in the BP liquid crystal, this device appears transparent under an applied electric field across the liquid crystal layer (FIG.11c), and dark when AD-FFs are generated around the holes in the second electrode of the layered electrodes, deposited on the device substrates (FIG.11d). In another embodiment of the present invention, the second electrode in the structure of a layered electrode, containing holes for generation of AD-FFs, which are possessing degenerated azimuthal directions around the holes, could be applied not only in one pixel liquid crystal device but also in such device containing plurality of pixels with layered electrodes having second electrodes with holes (FIG.12), which is driven by passive as well as by active TFT matrixes for switching of the liquid crystal by AD-FFs.
In another embodiment, according to the present invention, the layered electrode deposited on the device substrate 9 is forming X-Y electrode matrix, (FIG.13), wherein the Y column electrodes 12 are playing the role of second electrodes with holes and the X row electrodes 10 are playing the role of common electrodes of the layered electrodes, separated from each other by insulation layer 11. Such X-Y electrodes matrix might be deposited on one or on the both device substrates.

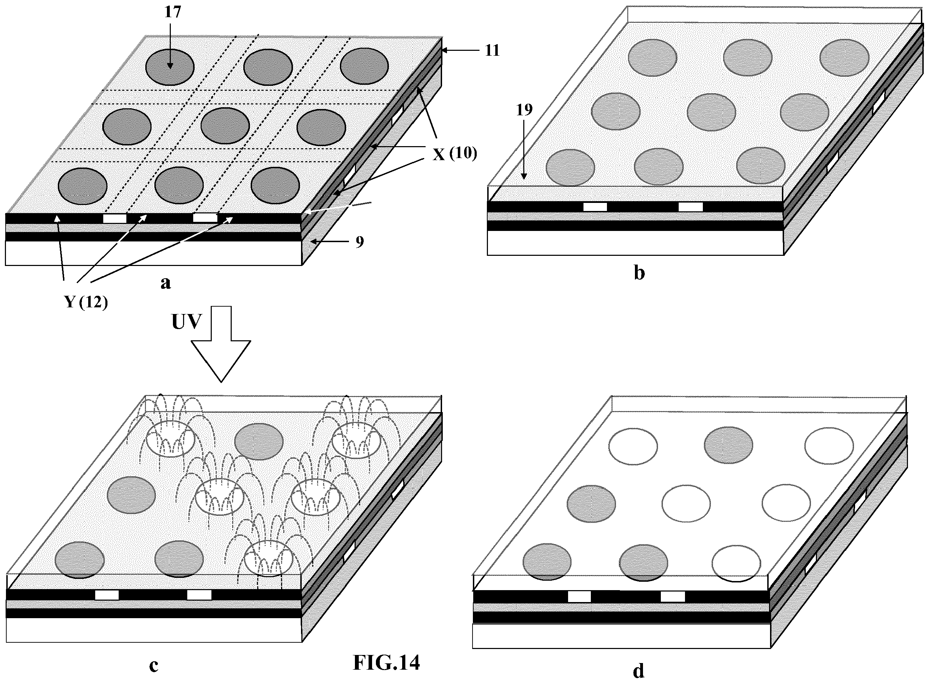

Another embodiment of the present invention, where the layered electrode with holes in the second electrode is used, according the invention, is a device comprising a single substrate (FIG.14), The device substrate 9 can be rigid or flexible, flat or curved, transparent, scattering or reflective, covered by alignment layer (not shown in the FIG.14) on top of which is deposited liquid crystal material 19, being, but not limited to polymerisable nematic, which for some applications could be photo-polymerisable, i.e under an applied electric field, the generated AD-FFs, around the holes in the second electrode, generate an image, which becomes permanent after illumination of the device with light with a proper wavelength, due to photo-polymerisation of the nematic. The deposited liquid crystal material 19 on top of the layered electrode could be of such kind that it polymerises permanently under either temperature or different kind of radiation (x-ray, electron beam, etc.).

According another embodiment of the present invention, the liquid crystal material 19 deposited onto the layered electrode of the one substrate device, is of such kind that the generated image by AD-FFs becomes temporally memorised through, for example, gelation or hydrogen bounding of the liquid crystal by temperature or irradiation, such as x-ray, electron beam, etc

According another embodiment the single substrate device (shown in Fig. 14) can be covered, for protection or other purposes, via coating, lamination or other means.

A person being skilled in the art may apply the concept of layered electrode, which second electrode is containing holes, according to the present invention, in different liquid crystal modes and devices where the liquid crystal is switching by AD-FFs.
The following example is provided to a better understanding of the current invention. However, the general concept is not limited to the particular application given below.

### EXAMPLE 1:

A sandwich cell comprising of two parallel glass plates is prepared and the space between them is filled with nematic liquid crystal material MLC 6686 (Merck) having positive dielectric anisotropy (Δ*ε*=10). On one of the glass substrates is deposited layered electrode comprising ITO common electrode (one single pixel device)), with thickness about 20nm and covered by insulation SiOx film of thickness of 200nm (such a thickness is necessary for avoiding pinholes in the oxide). On top of the SiOx film is deposited second electrode, represented by ITO film of 20nm thickness having circular holes with diameter of 10 ***µ***m and such a distance between them. The holes are uniformly distributed over the entire area of the layered electrode. On the inner surface of both substrates is finally deposit alignment layer made of polyamide material SE1211 (Nissan) for promoting field-off vertical alignment of the liquid crystal. Applying voltage to the layered electrode, AD-FFs are generated around each hole. The AD-FFs align the liquid crystal molecules along the field lines and therefore, azimuthal degenerated alignment of the liquid crystal takes place around each hole. Inserting the samples, described in this example, between two cross polarisers, the field-off state appears optically dark, due to vertical alignment of the liquid crystal, whereas the field-on state appears bright, due to azimuthal degenerated alignment of the liquid crystal around the holes in the second electrode. On FIG.13 is presented polarising microscope (PM) photographs of the sample inserted between two cross linear polarisers and rotated between them. As seen, when the sample is rotated between the polarisers at 67º, the displayed image exhibits a constant contrast being viewing angle independent. Constant contrast and angle independence of the display image retains at rotation angle of the sample even at 360º.

### EXAMPLE 2:

A device, according to the present invention is made of one glass substrate having a number of pixels each of them containing a layered electrode (e.g. FIG 12), which is described in EXAMPLE 1. On top of the layered electrode is deposited first alignment layer made of polyamide material SE1211 (Nissan) for promoting field-off vertical alignment of the liquid crystal. Then on top of the alignment layer is deposited photo-reactive liquid crystal monomer such as RM257 (Merck), in which is dissolved photo initiator Irgacure 651. Due to the alignment layer and the air/liquid crystal interface, the molecules of the photo-reactive monomer align along the substrate normal. Applying voltage to a selected pixel(s), the alignment of the molecules of the photo-reactive liquid crystal monomer is reoriented from vertical to azimuthal (in-plane) degenerated alignment around the holes of selected pixel due to generated AD-FFs. Illuminating the device in field-on state with UV light, the photo-reactive monomer polymerise permanently and thus the orientation of the molecules of photo-reactive monomer become permanently frozen. Inserted in between two crossed linear polarisers, only the activated pixel(s) of the device in field-off state are bright, due to the azimuthal (in-plane) degenerated alignment of the molecules of the polymerised photo-reactive liquid crystal monomer. The rest of the device area is dark, due to the permanently polymerised vertical orientation of the photo-reactive liquid crystal monomer molecules.

## Claims

1. A liquid crystal device comprising a first substrate, a second substrate and a liquid crystal layer sandwiched between said first and second substrate;
wherein an electrode structure is deposited on at least one of said first and second substrates, said electrode structure comprising:
- a first electrode layer;
- an insulating layer;
- a second electrode layer;
wherein said second electrode layer comprises holes, wherein each hole is adapted to generate local fringe fields with azimuthal degenerate direction.

2. The liquid crystal device according to claim 1, wherein said second electrode layer comprises a plurality of electrodes comprising holes for generating local fringe fields with azimuthal degenerate direction, wherein said plurality of electrodes are electrically insulated of each other.

3. The liquid crystal device according to claim 1 or 2, wherein both of said first and second substrates comprise said layered electrode structure.

4. The liquid crystal device according to claim 3, wherein said holes of the second electrode layer on said first substrate have a first distribution and said holes of the second electrode layer on said second substrate have a second distribution.

5. The liquid crystal device according to claim 4, wherein said first distribution is different from said second distribution.

6. The liquid crystal device according to claim 4, wherein said second electrode layer on said first substrate and said second electrode layer on said first substrate are arranged so that the holes of the second electrode layer on said first substrate coincides with the holes of the second electrode layer on said second substrate.

7. The liquid crystal device according to any preceding claim, wherein said holes are circular.

8. The liquid crystal device according to any preceding claim, wherein said holes have a uniform distribution.

9. The liquid crystal device according to any preceding claim, wherein at least one of said first and second substrate is flexible.

10. The liquid crystal device according to any preceding claim, wherein one of said first and second substrates is transparent and one of said first and second substrates is a mirror.

11. The liquid crystal device according to any preceding claim, further comprising at least one photovoltaic semiconductor conversion layer.

12. The liquid crystal device according to any preceding claim, further comprising two polarisers, wherein said first substrate, said second substrate and said liquid crystal layer is sandwiched between said polarisers.

13. The liquid crystal device according to claim 11 or 12, wherein the liquid crystal layer comprises a polymer network having a pronounced splay-bend structure around said holes of said layered structured of said first and second portions.

14. The liquid crystal device according to any preceding claim, wherein the device is electronically driven by an active TFT matrix.

15. The liquid crystal device according to any preceding claim, wherein the device is electronically driven by an X-Y-matrix.

16. A liquid crystal device comprising a substrate on which an electrode structure is deposited, said electrode structure comprising:
- a first electrode layer;
- an insulating layer;
- a second electrode layer;
wherein said second electrode layer comprises holes for generating local fringe fields with azimuthal degenerate direction around each hole, and wherein said liquid crystal device further comprises a liquid crystal layer being permanently or temporarily polymerizable.
